# EUROPEAN PATENT SPECIFICATION

(11) **EP 2 830 197 B1**
(45) Date of publication and mention of the grant of the patent: **08.05.2019**
(21) Application number: 13765050.3
(22) Date of filing: 20.03.2013
(51) Int. Cl.: H02K 5/14

(54) **SUPPORTING DEVICE OF BRUSH BRACKET AND MOTOR**
STÜTZVORRICHTUNG EINES BÜRSTENHALTERS UND MOTOR
DISPOSITIF DE SUPPORT DE PALIER POUR BALAI ET MOTEUR

(30) Priority: 20.03.2012 CN 201210075112
(43) Date of publication of application: 28.01.2015
(73) Proprietor: Bosch Automotive Products (Changsha) Co., Ltd, Changsha, Hunan 410100 (CN)
(72) Inventor: ZHANG, Yuanyin, Changsha Hunan 410100 (CN); ZHENG, Haibo, Changsha Hunan 410100 (CN); GAN, Xing, Changsha Hunan 410100 (CN); QIU, Dong, Changsha Hunan 410100 (CN); GROSSKOST, Yann, Changsha Hunan 410100 (CN)
(74) Representative: Bee, Joachim
(86) International application number: PCT/CN2013/072911
(87) International publication number: WO 2013/139267

(56) References cited:
- CN-A- 1 102 915
- CN-A- 101 868 902
- CN-U- 202 475 102
- GB-A- 1 219 906
- GB-A- 2 187 600
- US-A- 3 177 388
- US-A- 5 753 993

## Description

### Technical Field

The invention generally relates to an electric motor, and in particular, relates to a supporting device for a brush holder of the electric motor.

### Background Art

For an electric motor of a vehicle, brushes are often used for electrically connection with a commutator of the motor. As is well known in the field of electric motor, the brushes of the motor are very important components which directly affect the service life of the motor with the brushes. Generally, a brush is held by a brush holder, and thus the brush holder and the brush both are very important components. No matter what a good property of the brush has, the property can not be implemented sufficiently if the brush holder is inappropriate, and the property and the service life of the motor itself will be adversely affected.

The brush holder is mounted in a motor housing by means of a supporting device. Circumferential positioning of the brush holder in the motor housing can be achieved by the brush holder itself, and axial positioning needs to be achieved by means of the supporting device. This requires that the supporting device of the brush holder has a proper structure to axially position the brush holder.

In addition, vibration or other unstable phenomena may occur for a high speed motor, and this requires an axial force to be pre-applied to an output shaft of the motor to reduce vibration and noise. The axial force is transferred to a bearing seat of the brush holder through a bearing carrying the output shaft, and the axial force transferred to the brush holder is then transferred to the rigid metal motor housing through the supporting device of the brush holder. In a case that the supporting device has a high rigidity, the force that the brush holder is subjected to is at a high level, and the axial force decreases due to plastics material which is easy to become fatigued, which causes vibration and noise. In a case that the supporting device is flexible, the axial force, after being transferred to the output shaft of the motor, is absorbed or buffered by the supporting device of the brush holder, which can reduce adverse affects of vibration and noise.

In an existing technical solution, the brush holder is directly fixed on the motor housing. In particular, the motor housing is formed at its opening end with a step for receiving the brush holder. However, the motor housing with this feature has to be manufactured with a thickened material, which causes waste of material and an increased manufacturing cost of the motor housing.

It is thus desired to provide a supporting device which not only can axially position the brush holder into the motor housing but also can overcome the above mentioned shortcomings.

Examples for supporting devices for a brush holder of a motor are described in US 3 177 388 A, GB 2 187 600 A and GB 1 219 906 A, for instance.

### Summary of the Invention

An object of the invention is to solve a technical problem of the mounting of a brush holder of a motor in a motor housing, while overcoming the above shortcomings related with the motor housing on which the brush holder is fixed.

The invention provides a supporting device for a brush holder with the features of claim 1.

According to the invention, a supporting device for a brush holder of a motor is provided, which can achieve and simplify the mounting of the brush holder of the motor in a motor housing and provide a flexible axial support for the brush holder. The supporting device has advantages of a simple structure, low requirements of machining tolerances of the components, and thus a low cost. In particular, since no step is needed to be formed on the motor housing for receiving the brush holder, the manufacturing requirement of the motor housing is reduced, the thickness of the motor housing is decreased, and the manufacturing cost of the motor housing is reduced.

According to a preferred embodiment, the supporting device is an integral part made of insulative plastics.

The supporting posts may have an arc profile consistent with the profile of a circular outer surface of the base, or may have any other cross-sectional shape that does not extend beyond the circular outer profile of the base, such as rectangular, trapezoid etc.

According to a preferred embodiment, each first supporting post is formed with a reinforcing rib extending from the circumferential segment along the axial direction.

According to a preferred embodiment, each first supporting post is formed with a radial stop proximate to its top end, the radial stop being configured for restricting a radial position of the first supporting post relative to the brush holder. A radial stop provided on the brush holder may engage the radial segments of the channel shaped supporting post, or may engage other portions of the channel shaped supporting post, for example, engage the radially inner side of the circumferential segment between the two radial segments.

According to a preferred embodiment, each first supporting post is formed with a cutout proximate to its top end which extends transversely relative to the central axis of the motor, so that the top end of the first supporting post constitutes a top resilient tab being able to be axially and elastically deformed.

According to a preferred embodiment, the cutout opens radially outward so that the top resilient tab terminates at its radially inner end inside of the first supporting post.

According to a preferred embodiment, the top resilient tab has a radially outer end which is closer to a top surface of the brush holder than the radially inner end.

According to a preferred embodiment, the supporting device further comprises second supporting posts which are distributed uniformly along the circumference of the base between the first supporting posts, each second supporting post comprising a bottom end connected with the base and a top end for supporting the brush holder.

According to a preferred embodiment, in a plane perpendicular to a central axis of the motor, each second supporting post has a generally trapezoid or sector cross-sectional shape. It can be understood that, similar to the first supporting post, the second supporting posts may have a profile consistent with the profile of the circular outer surface of the base, or may have any cross-sectional profile that does not extend beyond the circular outer profile of the base.

According to a preferred embodiment, each second supporting post has a circumferential width smaller than that of the first supporting post.

According to a preferred embodiment, the supporting device further comprises mounting posts for mounting internal functional components of the motor which are formed at at least one side of opposite sides of each second supporting post in the circumferential direction and are adjacent to the second supporting post, the mounting post having an axial height smaller than that of the second supporting post. Alternatively, any desired number of mounting posts with any desired heights can be provided at any desired locations of the base.

According to another aspect of the invention, a motor is provided, in particular a motor of a vehicle, wherein the motor comprise: a housing; the supporting device as above, the base of the supporting device being seated on the inside bottom surface of the housing; and a brush holder supported in the housing by the supporting device. Alternatively, the motor can be a motor used in a power tool, such as an electric drill or an electric saw, or a motor used in other apparatus.

According to a preferred embodiment, the brush holder is an integral part made of insulative plastics.

According to another aspect of the invention, the brush holder is formed with a circumferential positioning portion which is configured to be mated with a top end of the first supporting post to position the brush holder relative to the supporting device along a circumferential direction.

According to a preferred embodiment, the supporting device further comprises second supporting posts which are distributed uniformly along the circumference of the base between the first supporting posts, each second supporting post comprising a bottom end connected with the base and a top end for supporting the brush holder; and the brush holder comprises a radial stop which is configured to be mated with a top end of the second supporting post to restrict a radial position of the second supporting post relative to the brush holder.

According to a preferred embodiment, an output shaft of the motor is rotatably supported by a bearing mounted in the brush holder.

According to a preferred embodiment, the brush holder is provided with a flange at its outer circumference, and an interference fit is established between the flange and an inner circumferential surface of the housing.

According to a preferred embodiment, the motor is a motor used in an ABS system of a vehicle, or the motor is a motor used in an ESP system of a vehicle.

According to the invention, a supporting device for a brush holder of a motor is provided, which simplifies the mounting of the brush holder of the motor into a motor housing and provides a secure and flexible axial support for the brush holder. The supporting device has advantages of a simple structure, low requirements of machining tolerances of the components, and thus a low cost. In particular, the manufacturing requirement of the motor housing is reduced, the thickness of the motor housing is decreased, and the manufacturing cost of the motor housing is reduced.

### Brief Description of the Drawings

A supporting device of a brush holder according to the invention is shown in the drawings, only for the purpose of illustration. The drawings may not be depicted to scale, in which:
Figure 1 is a perspective view from outside showing that a brush holder of a motor is mounted in a motor housing;
Figure 2 is a perspective view of the brush holder and a supporting device according to the invention with the motor housing removed, wherein the supporting device is constructed according to a first embodiment of the invention;
Figure 3 is a perspective view of the supporting device according to the first embodiment of the invention;
Figure 4 is another perspective view of Figure 2;
Figure 5 is a perspective view of the brush holder corresponding to Figure 4;
Figure 6 is a perspective view of a supporting device according to a second embodiment of the invention;
Figure 7 is a partially enlarged view of Figure 6;
Figure 8 is a perspective view of the brush holder and the supporting device according to the invention with the motor housing removed, wherein the supporting device is constructed according to the second embodiment of the invention; and
Figure 9 illustrates a non-linear axial rigidity profile of an assembly of the brush holder and the supporting device during the mounting of the brush holder.

### Detailed Description of Preferred Embodiments

A supporting device for a brush holder (also called an electric brush holder or a carbon brush holder) of an electric motor according to the invention can be used in an electric motor of any power tool and in an electric motor of any other apparatus, such as in an electric motor of a vehicle (such, in an electric motor of an ABS system or of an ESP system).

In the context, an "axial direction" is a direction along which a central axis of an electric motor housing extends, i.e. the direction along which central axes of the brush holder and of the supporting device extend, and a "radial direction" is a direction perpendicular to the axial direction.

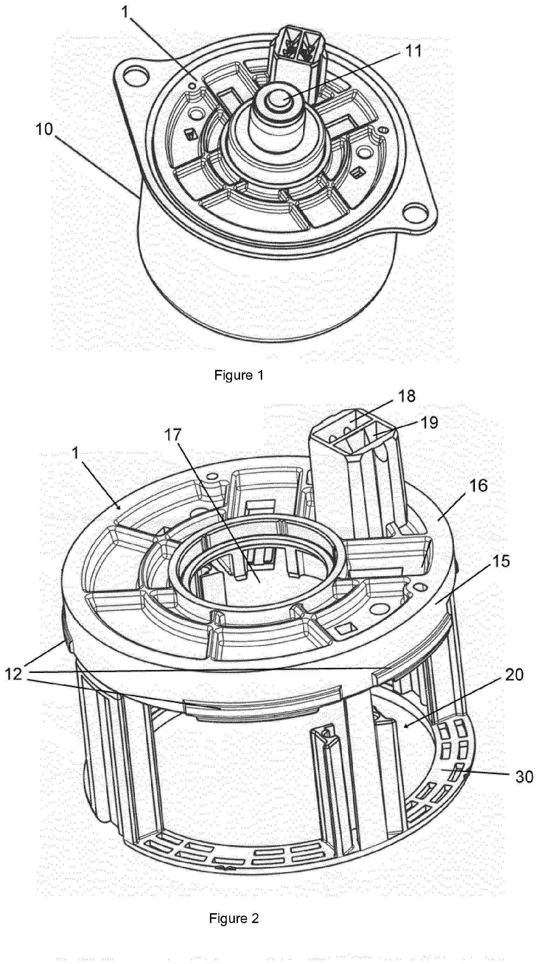

In an embodiment according to the invention, a brush holder is denoted by a reference number 1. Figure 1 shows that the brush holder 1 of a motor is mounted in a motor housing 10 by means of a supporting device according to the invention.

Generally, the motor housing 10 is a forged metal part and is formed as a generally cylindrical "barrel" with smooth surfaces, with an end closed and an end opened for mounding the brush holder 1. The supporting device according to the invention is located in the motor housing 10.

Generally, the brush holder 1 is a molded integral part and is made of plastics, for example.

The brush holder 1 has a generally flat disc shape with a central hole 17 formed at a center of the brush holder 1. An output shaft 11 of the motor extends out of the motor housing 10 via a bearing mounted in the central hole 17.

The brush holder 1 is further provided with cable passages 18 and 19, and cables connected with positive and negative poles of the motor pass through the respective cable passages.

The brush holder 1 further comprises an upper surface 16 facing outwards of the motor housing 10 when the brush holder 1 is mounted in the motor housing 10 and a cylindrical outer circumferential surface 15. The outer circumferential surface 15 is provided with a flange 12, the flange 12 being situated in a plane which is perpendicular to the axial direction at a distance from the upper surface 16 and protruding outwardly from the outer circumferential surface 15.

In the embodiment shown in Figure 2, the flange 12 is formed as discrete segments along a circumferential direction of the outer circumferential surface 15 of the brush holder 1. In another embodiment, the flange 12 may extend along an entire circumference of the outer circumferential surface 15.

When the brush holder 1 is mounted in the motor housing 10, the flange 12 of the brush holder 1 is inserted into the motor housing 10, with a friction and interference fit with an inner surface of the motor housing 10, until the brush holder 1 is axially positioned, wherein the friction between the flange 12 of the brush holder 1 and the inner surface of the motor housing 10 causes the brush holder 1 to be fixed along the circumferential direction of the motor housing 10.

In order to axially position the brush holder 1 into the motor housing 10 properly and securely to ensure the properties of a brush supporting by the brush holder and the properties of the entire motor, the supporting device 20 for the brush holder 1 according to the invention is developed.

The supporting device 20 for the brush holder 1 according to the invention may comprise a molded integral part and may be made of plastics with good elasticity. In one embodiment, the supporting device 20 may be made of fiber glass reinforced plastics.

The supporting device 20 for the brush holder 1 of the motor according to a first embodiment of the invention will be described with reference to Figures 2-5.

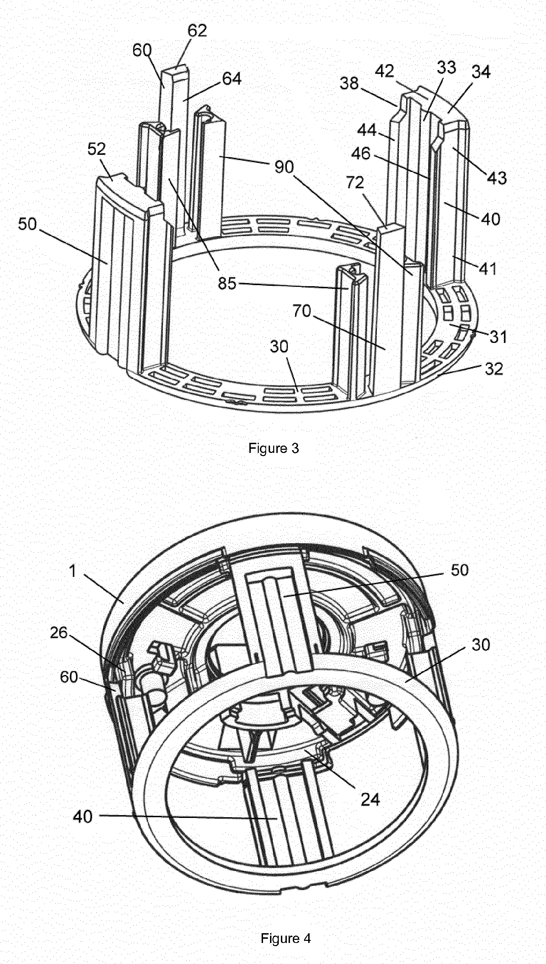

In Figures 2 and 4, the motor housing 10 is removed to expose the brush holder 1 and the supporting device 20 according to the first embodiment of the invention which are mounted in the motor housing 10. Figure 3 is a perspective view of the supporting device 20 according to the first embodiment of the invention.

As shown in the drawings, the supporting device 20 according to the first embodiment of the invention has a generally frame-like structure and comprises an annular base 30.

The annular base 30 comprises opposite upper and lower surfaces 31 and 32. When the supporting device 20 for the brush holder 1 is placed in the motor housing 10, the lower surface 32 of the annular base 30 contacts with an inside bottom surface of the motor housing 10.

The supporting device 20 for the brush holder 1 further comprises four supporting posts, i.e. the supporting posts 40, 50, 60 and 70, connected with the annular base 30 and configured for supporting and axially positioning the brush holder 1 mounted into the motor housing 10. The four supporting posts extend parallel to the axial direction and have such lengths (heights) in the axial direction that, when the brush holder 1 and the supporting device 20 are mounted in the motor housing 10, the upper surface 16 of the brush holder 1 is situated at a predetermined position, for example, at a position slightly offset inwardly along the axial direction from an upper surface of the motor housing 10. Preferably, the four supporting posts may have the same height.

In addition, two supporting posts 40 and 50 are provided diametrically about the center of the supporting device 20. The supporting posts 40 and 50 are generally the same, as shown in Figure 3, and thus the description about the supporting post 40 is also applicable to the supporting post 50.

The supporting post 40 has a general channel shape and comprises a circumferential portion 34 extending along a circumference of the annular base 30 and two radial portions 44 and 46 which extend radially inward from two ends of the circumferential portion and form a channel shaped opening. The supporting post 40 comprises a bottom end 41 connected with the annular base 30 and a top end 43 opposite to the bottom end 41. The channel shaped supporting post 40 is provided with a cutout portion 38 near the top end 43 for functioning as a radial stop, the cutout portion 38 being configured to be engaged with a corresponding radial stop 24 of the brush holder 1 (Figure 4) to axially and radially position the brush holder 1 being mounted.

The channel shaped supporting post 40 further comprises a reinforcing rib 33 extending along the axial direction.

Similarly, the other two supporting posts 60 and 70 are provided diametrically about the center of the supporting device 20. The supporting posts 60 and 70 are generally same, as shown in Figure 3, and thus the description about the supporting post 60 is also applicable to the supporting post 70.

The supporting post 60 has a generally solid sector shape and has an outer profile generally consistent with that of the annular base 30. The supporting post 60 comprises a side 64 facing a central axis of the supporting device 20, and correspondingly, the brush holder 1 further comprises a radial stop 26 to be engaged with the side 64 of the supporting post 60.

The supporting post 60 also comprises a bottom end connected with the annular base 30 and a top end opposite to the bottom end. At opposite sides of the supporting post 60 in the circumferential direction, the supporting device 20 comprises mounting posts 85 and 90 for mounting other functional components of the motor which extend parallel to the supporting post 60 by an extending length (height) less than that of the supporting post 60. Alternatively, the supporting device 20 may comprise the mounting post at only one side of the supporting post 60.

Preferably, a connecting line between the supporting posts 40 and 50 passing through the center of the supporting device 20 is perpendicular to a connecting line between the supporting posts 60 and 70 passing through the center of the supporting device 20, that is to say, the four supporting posts 40, 50, 60 and 70 are distributed uniformly along the circumferential direction of the supporting device 20.

The four supporting posts 40, 50, 60 and 70 each comprise a top surface 42, 52, 62 or 72. Accordingly, the brush holder 1 comprises, at its lower surface opposite to the upper surface 16, contacting areas to be contacted with the corresponding supporting posts. In each contacting area, there is provided with a radial stop corresponding to the respective supporting post, for example, the radial stop 24 for the supporting post 40 and the radial stop 26 for the supporting post 60 as shown in Figure 4, and radial stops for the supporting posts 50 and 70 not shown.

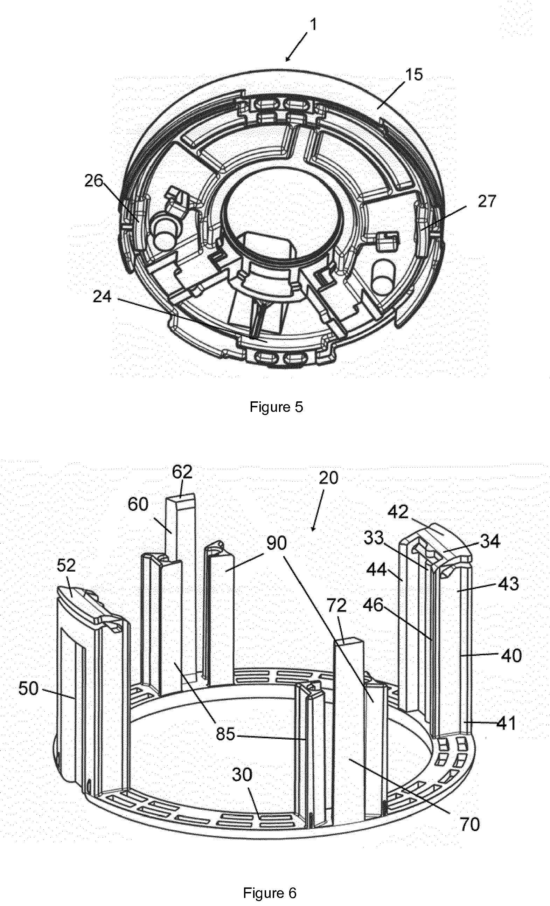

To mount the brush holder 1 of the motor, firstly, the supporting device 20 for the brush holder 1 is inserted into the motor housing 10 along the axial direction, until the lower surface 32 of the supporting device 20 contacts the inside bottom surface of the motor housing 10. With the brush holder 1 of the motor held in a hand, the contacting areas of the brush holder 1 for contacting the supporting posts 40, 50, 60 and 70 are aligned with the supporting posts 40, 50, 60 and 70, and the brush holder 1 is inserted into the motor housing 10 until the radial stops of the brush holder 1 become in contact with the supporting posts 40, 50, 60 and 70, for example, the radial stop 24 of the brush holder 1 contacts the cutout portion 38 of the supporting post 40 and the radial stops 26, 27 of the brush holder 1 (Figure 5) contact the side 64 of the supporting post 60 and a radially inner side of the supporting post 70 respectively. In this way, the brush holder 1 of the motor is mounted into place.

For convenience, the supporting posts 60, 70 each, at their radially inner sides at their top ends, comprise cutouts as the cutout described with regard to the supporting post 40, so that the supporting posts 60, 70 also function to axially position the brush holder 1.

With the supporting device 20 according to the invention, flexible axial supporting of the brush holder 1 in the motor housing 10 is achieved, and the supporting device 20 has a simple structure, has low requirements of machining tolerances of the components, and thus has a low cost. On the other hand, no step is needed to be formed on the motor housing 10 for receiving the brush holder 1, which reduces the manufacturing requirement of the motor housing 10, decreases a thickness of the motor housing 10 required, and reduces the manufacturing cost of the motor housing 10.

In this embodiment, the supporting device 20 comprises the four supporting posts for contacting or supporting the brush holder 1, while it should be understood by a skilled in the art that the number of the supporting posts can be chosen according to actual demands.

In the illustrated embodiment, the supporting posts 40 and 50 have a length in the circumferential direction of the annular base 30 greater than that of the supporting posts 60 and 70, and the supporting posts 40 and 50 have an arc profile consistent with the profile of an outer surface of the annular base 30 or have any cross-sectional shape that does not extend beyond a circular profile of the outer surface of the annular base 30, such as trapezoid, rectangular, sector etc. Similarly, the supporting posts 60 and 70 may also have any cross-sectional shape that does not extend beyond the circular profile of the outer surface of the annular base 30. It should be understood by the skilled in the art that the above description is merely illustrative and is not intended to limit the invention, and other shapes can be conceived of for the base by the skilled in the art, for example, rectangular.

It can be understood that the brush holder 1 may further be provided with a circumferential positioning portion which is configured to be mated with the top end or the side of the supporting post of the supporting device 20 to position the brush holder 1 relative to the supporting device 20 along the circumferential direction, while guiding the mounting of the brush holder 1 into the motor housing 10.

It is well known in the art that, in a motor field, vibration or other unstable phenomena may occur for a high speed motor, and then an axial force along the axial direction of the brush holder 1 may be generated on the output shaft 11 of the motor and transferred to the motor housing 10 through a bearing carrying the output shaft 11 of the motor, the brush holder 1 on which the bearing is mounted, and the supporting device 20 for the brush holder 1. The axial force may affect the property of the motor and cause vibration and noise because the motor housing 10 is made of steel.

To solve this technical problem, a supporting device 20 according to a second exemplary embodiment of the invention is designed for at least partially absorbing or buffering the axial force F transferred to a brush holder 1.

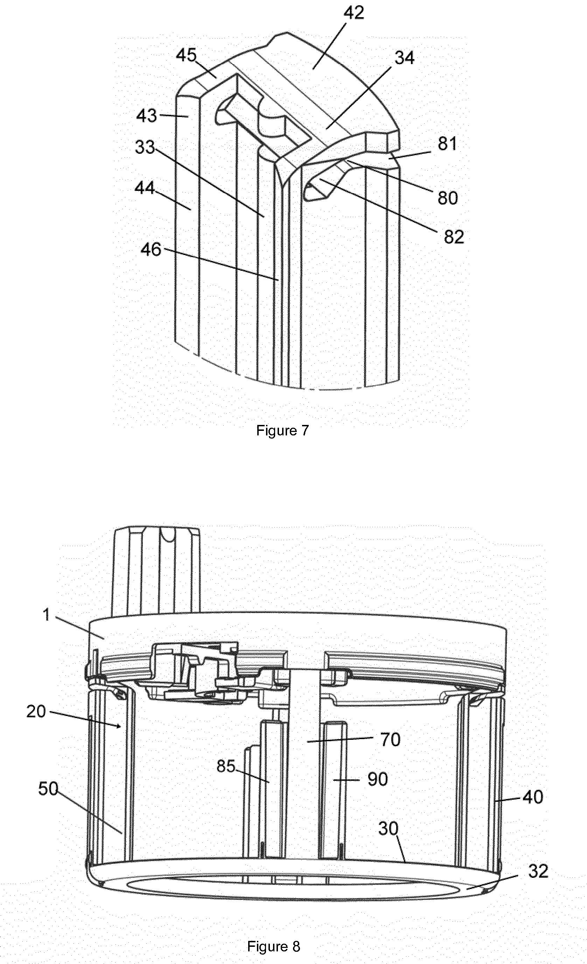

The supporting device 20 according to the second embodiment of the invention will be described with reference to Figures 6-8, in which Figure 6 shows its perspective view, Figure 7 shows a partially enlarged view of Figure 6, and Figure 8 is an assembled perspective view of the brush holder and the supporting device according to the invention.

As same as the supporting device 20 according to the first embodiment of the invention described above, the supporting device 20 according to the second embodiment of the invention also comprises an annular base 30, supporting posts 40, 50, 60 and 70 extending from the annular base 30 and perpendicularly to the annular base 30.

For clarity, only the supporting post 40 is described in detail, and similarly, the description about the supporting post 40 is also applicable to the supporting post 50.

As shown in Figure 6, the supporting post 40 comprises a bottom end 41 connected with the annular base 30 and a top end 43 opposite to the bottom end 41.

The supporting post 40 is provided at the top end 43 with a generally planar top surface 42. Different from the first embodiment, the supporting post 40 in the second embodiment may not be provided with the cutout portion 38, but with a planar and inclined surface or a curved surface 45 which inclines down inwardly along the radial direction of the supporting device 20 from the top surface 42.

The supporting post 40 is formed at its top end 43 with a cutout 80 extending transversely relative to the central axis of the motor. The cutout 80 extends inwardly along the radial direction from a circumferential portion 34 of the supporting post 40 and terminates inside of a body of the supporting post 40, extending from one side of the supporting post 40 along the circumferential direction of the annular base 30 to another side through the supporting post 40.

The cutout 80 comprises a radially outer end 81 and a radially inner end 82 proximate to the central axis of the motor, and the radially outer end 81 is closer to the top surface 42 than the radially inner end 82 so that the top end 43 of the supporting post constitutes a top resilient tab being able to be elastically deformed.

Similarly, the top end of the supporting post 50 is formed with the similar cutout structure.

Due to the cutout 80, when the axial force F is generated on the output shaft of the motor, the axial force F is transferred to the brush holder 1 mounted in a motor housing 10 through the bearing, and the force transferred to the brush holder 1 acts on the top surfaces 42, 52, 62 and 72 of the supporting device 20. Due to the cutout 80, the rigidity of the supporting device 20 along the axial direction is reduced, and the axial force can not be transferred by the supporting posts 40 and 50 any more, which results in that the axial force F entirely acts on the supporting posts 60 and 70 and deforms the supporting posts 60 and 70 to a greater extent. In this way, the supporting device 20 entirely absorbs or at least substantially reduces the axial force F transferred to the motor housing 10.

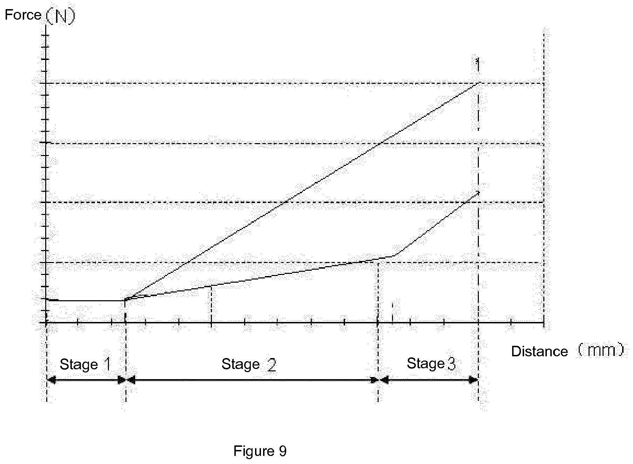

Figure 9 is an axial rigidity profile of an assembly of the brush holder 1 and the supporting device 20 in a case that the axial force F is applied to the brush holder 1 which is mounted via a test. In the test, the axial force F applied to the brush holder 1 begins to be measured when the brush holder 1 begins to be inserted into the motor housing 10 in order to obtain the axial rigidity profile of the assembly of the brush holder 1 and the supporting device 20. The x-coordinate refers to a distance by which the brush holder 1 is inserted into the motor housing 10, and the γ-coordinate refers to the axial force F applied to the brush holder 1.

Profile I is the profile obtained in a case that the brush holder 1 is mounted by means of the supporting device 20 according to the first embodiment of the invention. The test begins when the brush holder 1 begins to be inserted into the motor housing 10 along the axial direction. In profile I, "stage 1" refers to an initial time period from the time when the brush holder 1 begins to be inserted into the motor housing 10, during which the brush holder 1 is not in contact with the supporting device 20 and then the axial force F applied to the brush holder 1 is substantially used for overcoming the friction between the flange 12 of the brush holder 1 and the inner surface of the motor housing 10. Thus, profile I is horizontal in "stage 1", and the magnitude of the axial force F is substantially equal to the friction force between the flange 12 of the brush holder 1 and the inner surface of the motor housing 10. As the brush holder 1 begins to contact the supporting device 20, in particular, contact the top surfaces of the supporting posts of the supporting device 20, the force of elastically deforming the four supporting posts of the supporting device 20 needs to be overcome in order that the brush holder 1 can be moved continually along the axial direction. Thus, during a time period after "stage 1", the axial force F necessary for the brush holder 1 to be moved continually is increased linearly.

Profile II indicates the profile obtained with the supporting device 20 according to the second embodiment of the invention. The test still begins when the brush holder 1 begins to be inserted into the motor housing 10 along the axial direction. During the stage 1, that is before the brush holder 1 contacts the supporting device 20, the axial force F applied to the brush holder 1 is substantially equal to the friction force between the flange 12 of the brush holder 1 and the inner surface of the motor housing 10, which is as same as profile I, that is, profile II is consistent with profile I during the stage 1. However, with the supporting device 20 according to the second embodiment, after the brush holder 1 contacts the supporting posts of the supporting device 20, due to the top resilient tabs provided at the top ends of the two supporting posts 40 and 50 of the supporting device 20, the force which has to be overcome to continually move the brush holder 1 is the sum of the force which elastically deforms the supporting posts 60 and 70 and the force which is substantially smaller than the force elastically deforming the supporting posts 40 and 50 without the top resilient tabs, which causes the axial force F to be substantially smaller than the force elastically deforming the four supporting posts of the supporting device 20 according to the first embodiment. As shown in Figure 9, although the axial force F is also increased linearly, the slope in a stage 2 after the stage 1 in profile II is smaller than that in profile I, that is the axial force F is decreased. After completely deforming the top resilient tabs of the supporting posts 40 and 50, the axial force F enters a stage 3 in profile II which is the same as the supporting device 20 according to a first embodiment of the invention. The force which has to be overcome to move the brush holder 1 is the force elastically deforming the four supporting posts of the supporting device 20, and thus the slope of profile II is increased up to that of profile I.

As described above, by providing the supporting device 20 according to the second embodiment of the invention with the top resilient tabs on the opposite two supporting posts, the supporting device 20 is allowed to be axially deformed to a greater extent. In this way, a more flexible axial support is provided for the brush holder 1, the tolerance requirements of individual components are reduced, a retaining force corresponding to the maximum tolerance is reduced, and the cost is further reduced.

With a supporting device for a brush holder of a motor according to the invention, the mounting of the brush holder of the motor into a motor housing is simplified, and a secure and flexible axial support of the brush holder is achieved. The supporting device has advantages of a simple structure, low requirements of machining tolerances of the components, and thus a low cost. In particular, the manufacturing requirement of the motor housing is reduced, the thickness of the motor housing is decreased, and the manufacturing cost of the motor housing is reduced.

While preferred embodiments of the invention have been described as above, it should be appreciated by a skilled in the art that the features and aspects described with reference to one embodiment can be applied to other embodiments according to the invention without departing from the scope defined by the claims, and the invention intends to cover all amendments and variants falling within the scope of the claims.

## Claims

1. A supporting device (20) for a brush holder (1), configured for supporting the brush holder (1) of a motor in a housing (10) of the motor, wherein the supporting device (20) comprises:
a base (30) which is configured to be seated on an inside bottom surface of the motor housing (10); and
at least two first supporting posts (40, 50) which extend from a circumference of the base (30) along an axial direction of the motor and are distributed uniformly along the circumference of the base (30), wherein each first supporting post (40, 50) comprises a bottom end (41) connected with the base and a top end (42, 52) for supporting the brush holder (1)
**characterized in that**
in a plane perpendicular to a central axis of the motor, each first supporting post (40, 50) has a generally channel shaped cross section, the generally channel shaped cross section being constituted with a circumferential segment (34) extending along a circumferential direction of the base (30) and radial segments (44, 46) extending radially inward from two ends of the circumferential segment (34) respectively.

2. The supporting device (20) according to claim 1, wherein the supporting device (20) is an integral part made of insulative plastics.

3. The supporting device (20) according to claim 1 or 2, wherein each first supporting post (40, 50) is formed with a reinforcing rib (33) extending from the circumferential segment (34) along the axial direction.

4. The supporting device (20) according to any one of claims 1-3, wherein each first supporting post (40, 50) is formed with a radial stop (24) proximate to its top end (42, 52), the radial stop (24) being configured for restricting a radial position of the first supporting post (40, 50) relative to the brush holder (1).

5. The supporting device (20) according to any one of claims 1-4, wherein each first supporting post (40, 50) is formed with a cutout (80) proximate to its top end (42, 52) which extends transversely relative to the central axis of the motor, so that the top end (42, 52) of the first supporting post (40, 50) constitutes a top resilient tab being able to be axially and elastically deformed.

6. The supporting device (20) according to claim 5, wherein the cutout (80) opens radially outward so that the top resilient tab terminates at its radially inner end (82) inside of the first supporting post (40, 50).

7. The supporting device (20) according to claim 6, wherein the top resilient tab has a radially outer end (81) which is closer to a top surface of the brush holder (1) than the radially inner end (82).

8. The supporting device (20) according to any one of claims 1-7, wherein the supporting device (20) further comprises second supporting posts (60, 70) which are distributed uniformly along the circumference of the base (30) between the first supporting posts (40, 50), each second supporting post comprising a bottom end connected with the base (30) and a top end (62, 72) for supporting the brush holder (1).

9. The supporting device (20) according to claim 8, wherein, in a plane perpendicular to a central axis of the motor, each second supporting post (60, 70) has a generally trapezoid or sector cross-sectional shape.

10. The supporting device (20) according to claim 9, wherein each second supporting post (60, 70) has a circumferential width smaller than that of the first supporting post (40, 50).

11. The supporting device (20) according to claim 10, wherein the supporting device (20) further comprises mounting posts (85, 90) for mounting internal functional components of the motor which are formed at at least one side of opposite sides of each second supporting post (60, 70) in the circumferential direction and are adjacent to the second supporting post (60, 70), the mounting post (85, 90) having an axial height smaller than that of the second supporting post (60, 70).

12. A motor, in particular a motor for a vehicle, wherein the motor comprise:
a housing (10);
a supporting device (20) according to any one of claims 1-11, the base (30) of the supporting device (20) being seated on the inside bottom surface of the housing (10); and
a brush holder (1) supported in the housing (10) by the supporting device (20).

13. The motor according to claim 12, wherein the brush holder (1) is an integral part made of insulative plastics.

14. The motor according to claim 12 or 13, wherein the brush holder (1) is formed with a circumferential positioning portion (24) which is configured to be mated with a top end (42, 52) of the first supporting post (40, 50) to position the brush holder (1) relative to the supporting device (20) along a circumferential direction.

15. The motor according to any one of claims 12-14, wherein the supporting device (20) further comprises second supporting posts (60, 70) which are distributed uniformly along the circumference of the base (30) between the first supporting posts (40, 50), each second supporting post (60, 70) comprising a bottom end connected with the base (30) and a top end (62, 72) for supporting the brush holder (1); and
the brush holder (1) comprises a radial stop (26, 27) which is configured to be mated with a top end (62, 72) of the second supporting post (60, 70) to restrict a radial position of the second supporting post (20) relative to the brush holder (1).

16. The motor according to any one of claims 12-15, wherein an output shaft (11) of the motor is rotatably supported by a bearing mounted in the brush holder (1).

17. The motor according to any one of claims 12-16, wherein the brush holder (1) is provided with a flange (12) at its outer circumference (15), and an interference fit is established between the flange (12) and an inner circumferential surface of the housing (10).

## Patentansprüche

1. Halterungsvorrichtung (20) für einen Bürstenträger (1), die ausgestaltet ist, den Bürstenträger (1) eines Motors in einem Gehäuse (10) des Motors zu halten, wobei die Halterungsvorrichtung (20) umfasst:
eine Basis (30), die ausgestaltet ist, an einer unteren Innenfläche des Motorgehäuses (10) zu sitzen; und
mindestens zwei erste Halterungsstreben (40, 50), die sich von einem Umfang der Basis (30) entlang einer axialen Richtung des Motors erstrecken und gleichmäßig entlang des Umfangs der Basis (30) verteilt sind, wobei jede erste Halterungsstrebe (40, 50) ein unteres Ende (41), das mit der Basis verbunden ist, und ein oberes Ende (42, 52) zum Halten des Bürstenhalters (1) umfasst
**dadurch gekennzeichnet, dass**
in einer Ebene im rechten Winkel zu einer Mittelachse des Motors jede erste Halterungsstrebe (40, 50) einen im Allgemeinen kanalförmigen Querschnitt aufweist, wobei der im Allgemeinen kanalförmige Querschnitt durch ein Umfangssegment (34), das sich entlang einer Umfangsrichtung der Basis (30) erstreckt, und radiale Segmente (44, 46), die sich von zwei Enden des Umfangssegments (34) jeweils radial nach innen erstrecken, gebildet wird.

2. Halterungsvorrichtung (20) nach Anspruch 1, wobei die Halterungsvorrichtung (20) ein einstückiges Teil aus isolierenden Kunststoffen ist.

3. Halterungsvorrichtung (20) nach Anspruch 1 oder 2, wobei jede erste Halterungsstrebe (40, 50) mit einer Verstärkungsrippe (33) ausgebildet ist, die sich von dem Umfangssegment (34) entlang der axialen Richtung erstreckt.

4. Halterungsvorrichtung (20) nach einem der Ansprüche 1-3, wobei jede erste Halterungsstrebe (40, 50) mit einem radialen Anschlag (24) nahe ihres oberen Endes (42, 52) ausgebildet ist, wobei der radiale Anschlag (24) ausgestaltet ist, eine radiale Position der ersten Halterungsstrebe (40, 50) in Relation zu dem Bürstenträger (1) zu begrenzen.

5. Halterungsvorrichtung (20) nach einem der Ansprüche 1-4, wobei jede erste Halterungsstrebe (40, 50) mit einem Ausschnitt (80) nahe ihres oberen Endes (42, 52) ausgebildet ist, der sich in Relation zu der Mittelachse des Motors quer erstreckt, sodass das obere Ende (42, 52) der ersten Halterungsstrebe (40, 50) eine obere federnde Lasche bildet, die sich axial und elastisch verformen kann.

6. Halterungsvorrichtung (20) nach Anspruch 5, wobei sich der Ausschnitt (80) radial nach außen öffnet, sodass die obere federnde Lasche an seinem radial inneren Ende (82) innerhalb der ersten Halterungsstrebe (40, 50) endet.

7. Halterungsvorrichtung (20) nach Anspruch 6, wobei die obere federnde Lasche ein radial äußeres Ende (81) aufweist, das näher an einer oberen Fläche des Bürstenträgers (1) ist als das radial innere Ende (82).

8. Halterungsvorrichtung (20) nach einem der Ansprüche 1-7, wobei die Halterungsvorrichtung (20) ferner zweite Halterungsstreben (60, 70) umfasst, die gleichmäßig entlang des Umfangs der Basis (30) zwischen den ersten Halterungsstreben (40, 50) verteilt sind, wobei jede zweite Halterungsstrebe ein unteres Ende, das mit der Basis (30) verbunden ist, und ein oberes Ende (62, 72) zum Halten des Bürstenträgers (1) umfasst.

9. Halterungsvorrichtung (20) nach Anspruch 8, wobei in einer Ebene quer zu einer Mittelachse des Motors jede zweite Halterungsstrebe (60, 70) eine im Allgemeinen trapezförmige oder kreisausschnittförmige Querschnittsform aufweist.

10. Halterungsvorrichtung (20) nach Anspruch 9, wobei jede zweite Halterungsstrebe (60, 70) eine Umfangsbreite aufweist, die kleiner ist als die der ersten Halterungsstrebe (40, 50).

11. Halterungsvorrichtung (20) nach Anspruch 10, wobei die Halterungsvorrichtung (20) ferner Montagestreben (85, 90) zum Montieren interner Funktionsbauteile des Motors umfasst, die an mindestens einer Seite von gegenüberliegenden Seiten jeder zweiten Halterungsstrebe (60, 70) in der Umfangsrichtung ausgebildet sind und an die zweite Halterungsstrebe (60, 70) angrenzen, wobei die Montagestrebe (85, 90) eine axiale Höhe aufweist, die kleiner ist als die der zweiten Halterungsstrebe (60, 70).

12. Motor, insbesondere ein Motor für ein Fahrzeug, wobei der Motor umfasst:
ein Gehäuse (10);
eine Halterungsvorrichtung (20) nach einem der Ansprüche 1-11, wobei die Basis (30) der Halterungsvorrichtung (20) an einer unteren Innenfläche des Gehäuses (10) sitzt; und
einen Bürstenträger (1), der in dem Gehäuse (10) von der Halterungsvorrichtung (20) gehalten ist.

13. Motor nach Anspruch 12, wobei der Bürstenträger (1) ein einstückiges Teil aus isolierenden Kunststoffen ist.

14. Motor nach Anspruch 12 oder 13, wobei der Bürstenträger (1) mit einem Umfangspositionierabschnitt (24) ausgebildet ist, der ausgestaltet ist, mit einem oberen Ende (42, 52) der ersten Halterungsstrebe (40, 50) zusammenzupassen, um den Bürstenträger (1) in Relation zu der Halterungsvorrichtung (20) entlang einer Umfangsrichtung zu positionieren.

15. Motor nach einem der Ansprüche 12-14, wobei die Halterungsvorrichtung (20) ferner zweite Halterungsstreben (60, 70) umfasst, die gleichmäßig entlang des Umfangs der Basis (30) zwischen den ersten Halterungsstreben (40, 50) verteilt sind, wobei jede zweite Halterungsstrebe (60, 70) ein unteres Ende, das mit der Basis (30) verbunden ist, und ein oberes Ende (62, 72) zum Halten des Bürstenträgers (1) umfasst; und
wobei der Bürstenträger (1) einen radialen Anschlag (26, 27) umfasst, der ausgestaltet ist, mit einem oberen Ende (62, 72) der zweiten Halterungsstrebe (60, 70) zusammenzupassen, um eine radiale Position der zweiten Halterungsstrebe (20) in Relation zu dem Bürstenträger (1) zu begrenzen.

16. Motor nach einem der Ansprüche 12-15, wobei eine Abtriebswelle (11) des Motors durch ein in dem Bürstenträger (1) montiertes Lager drehbar gehalten ist.

17. Motor nach einem der Ansprüche 12-16, wobei der Bürstenträger (1) mit einem Flansch (12) an seinem Außenumfang (15) bereitgestellt ist, und eine Übermaßpassung zwischen dem Flansch (12) und einer inneren Umfangsfläche des Gehäuses (10) hergestellt ist.

## Revendications

1. Dispositif de support (20) pour un porte-balai (1), configuré de manière à supporter le porte-balai (1) d'un moteur dans un carter (10) du moteur, dans lequel le dispositif de support (20) comprend:
une base (30) qui est configurée de manière à être posée sur une surface inférieure intérieure du carter de moteur (10); et
au moins deux premiers montants de support (40, 50) qui s'étendent à partir d'une circonférence de la base (30) le long d'une direction axiale du moteur et qui sont distribués uniformément le long de la circonférence de la base (30), dans lequel chaque premier montant de support (40, 50) comprend une extrémité inférieure (41) qui est connectée à la base (30) et une extrémité supérieure (42, 52) pour supporter le porte-balai (1),
**caractérisé en ce que**, dans un plan perpendiculaire à un axe central du moteur, chaque premier montant de support (40, 50) présente une section transversale essentiellement en forme de canal, la section transversale essentiellement en forme de canal étant constituée d'un segment circonférentiel (34) qui s'étend le long d'une direction circonférentielle de la base (30) et de segments radiaux (44, 46) qui s'étendent radialement vers l'intérieur à partir des deux extrémités du segment circonférentiel (34), respectivement.

2. Dispositif de support (20) selon la revendication 1, dans lequel le dispositif de support (20) est une partie intégrale constituée de plastique isolant.

3. Dispositif de support (20) selon la revendication 1 ou 2, dans lequel chaque premier montant de support (40, 50) est pourvu d'une nervure de renforcement (33) qui s'étend à partir du segment circonférentiel (34) le long de la direction axiale.

4. Dispositif de support (20) selon l'une quelconque des revendications 1 à 3, dans lequel chaque premier montant de support (40, 50) est pourvu d'un arrêt radial (24) à proximité de son extrémité supérieure (42, 52), l'arrêt radial (24) étant configuré de manière à restreindre une position radiale du premier montant de support (40, 50) par rapport au porte-balai (1) .

5. Dispositif de support (20) selon l'une quelconque des revendications 1 à 4, dans lequel chaque premier montant de support (40, 50) comporte une découpe (80) à proximité de son extrémité supérieure (42, 52) qui s'étend transversalement par rapport à l'axe central du moteur, de telle sorte que l'extrémité supérieure (42, 52) du premier montant de support (40, 50) constitue une languette supérieure élastique pouvant être déformée axialement et élastiquement.

6. Dispositif de support (20) selon la revendication 5, dans lequel la découpe (80) s'ouvre radialement vers l'extérieur de telle sorte que la languette supérieure élastique se termine à son extrémité radialement intérieure (82) à l'intérieur du premier montant de support (40, 50).

7. Dispositif de support (20) selon la revendication 6, dans lequel la languette supérieure élastique présente une extrémité radialement extérieure (81) qui est plus proche d'une surface supérieure du porte-balai (1) que l'extrémité radialement intérieure (82).

8. Dispositif de support (20) selon l'une quelconque des revendications 1 à 7, dans lequel le dispositif de support (20) comprend en outre des seconds montants de support (60, 70) qui sont distribués uniformément le long de la circonférence de la base (30) entre les premiers montants de support (40, 50), chaque second montant de support présentant une extrémité inférieure connectée à la base (30) et une extrémité supérieure (62, 72) pour supporter le porte-balai (1).

9. Dispositif de support (20) selon la revendication 8, dans lequel, dans un plan perpendiculaire à un axe central du moteur, chaque second montant de support (60, 70) présente une forme de section transversale essentiellement trapézoïdale ou sectorielle.

10. Dispositif de support (20) selon la revendication 9, dans lequel chaque second montant de support (60, 70) présente une largeur circonférentielle inférieure à celle du premier montant de support (40, 50).

11. Dispositif de support (20) selon la revendication 10, dans lequel le dispositif de support (20) comprend en outre des montants de montage (85, 90) pour monter des composants fonctionnels internes du moteur qui sont formé sur au moins un côté de côtés opposés de chaque second montant de support (60, 70) dans la direction circonférentielle et qui sont adjacents au second montant de support (60, 70), le montant de montage (85, 90) présentant une hauteur axiale inférieure à celle du second montant de support (60, 70).

12. Moteur, en particulier moteur pour un véhicule, dans lequel le moteur comprend:
un carter (10);
un dispositif de support (20) selon l'une quelconque des revendications 1 à 11, la base (30) du dispositif de support (20) étant posée sur la surface inférieure intérieure du carter (10); et
un porte-balai (1) supporté dans le carter (10) par le dispositif de support (20).

13. Moteur selon la revendication 12, dans lequel le porte-balai (1) est une partie intégrale constituée de plastique isolant.

14. Moteur selon la revendication 12 ou 13, dans lequel le porte-balai (1) est pourvu d'une partie de positionnement circonférentielle (24) qui est configurée de manière à être accouplée avec une extrémité supérieure (42, 52) du premier montant de support (40, 50) afin de positionner le porte-balai (1) par rapport au dispositif de support (20) le long d'une direction circonférentielle.

15. Moteur selon l'une quelconque des revendications 12 à 14, dans lequel le dispositif de support (20) comprend en outre des seconds montants de support (60, 70) qui sont distribués uniformément le long de la circonférence de la base (30) entre les premiers montants de support (40, 50), chaque second montant de support (60, 70) présentant une extrémité inférieure connectée à la base (30) et une extrémité supérieure (62, 72) pour supporter le porte-balai (1); et
le porte-balai (1) comprend un arrêt radial (26, 27) qui est configuré de manière à être accouplé avec une extrémité supérieure (62, 72) du second montant de support (60, 70) de manière à restreindre une position radiale du second montant de support (20) par rapport au porte-balai (1).

16. Moteur selon l'une quelconque des revendications 12 à 15, dans lequel un arbre de sortie (11) du moteur est supporté de façon rotative par un palier monté dans le porte-balai (1).

17. Moteur selon l'une quelconque des revendications 12 à 16, dans lequel le porte-balai (1) est pourvu d'une bride (12) au niveau de sa circonférence extérieure (15), et un ajustement serré est établi entre la bride (12) et une surface circonférentielle intérieure du carter (10).
